# EUROPÄISCHE PATENTSCHRIFT

(11) **EP 2 329 279 B1**
(45) Veröffentlichungstag und Bekanntmachung des Hinweises auf die Patenterteilung: **21.02.2018**
(21) Anmeldenummer: 09782083.1
(22) Anmeldetag: 21.08.2009
(51) Int. Cl.: G01P 13/00

(54) **VERFAHREN UND VORRICHTUNG ZUR ERMITTLUNG EINES BEWEGUNGSZUSTANDS EINES FAHRZEUGS MIT EINEM BESCHLEUNIGUNGSSENSOR**
METHOD AND DEVICE FOR DETERMINING A STATE OF MOTION OF A VEHICLE COMPRISING AN ACCELERATION SENSOR
PROCÉDÉ ET DISPOSITIF POUR DÉTERMINER UN ÉTAT CINÉMATIQUE D'UN VÉHICULE À L'AIDE D'UN CAPTEUR D'ACCÉLÉRATION

(30) Priorität: 25.08.2008 DE 102008039613
(43) Veröffentlichungstag der Anmeldung: 08.06.2011
(73) Patentinhaber: Continental Automotive GmbH, 30165 Hannover (DE)
(72) Erfinder: SEMMELRODT, Sven, 78662 Bösingen (DE)
(86) Internationale Anmeldenummer: PCT/EP2009/060832
(87) Internationale Veröffentlichungsnummer: WO 2010/023165

(56) Entgegenhaltungen:
- EP-A- 0 753 752
- EP-A- 1 357 354
- EP-A- 1 681 573
- JP-A- 10 078 446

## Beschreibung

Verfahren und Vorrichtung zur Ermittlung eines Bewegungszustands eines Fahrzeugs mit einem Beschleunigungssensor Eine fortwährend zunehmende Verkehrsdichte von Fahrzeugen auf Verkehrswegen verlangt immer häufiger sowohl nach einer präzisen Verkehrsleittechnik als auch nach einer individuellen Abrechnung der jeweils genutzten Verkehrswege. Sowohl in der Verkehrsleittechnik als auch für die individuelle Abrechnung der genutzten Verkehrswege, beispielsweise durch Mautsysteme, ist eine genaue Kenntnis von dynamischen Fahrzeugdaten eine wesentliche Voraussetzung. Insbesondere für Mautsysteme ist es dabei wichtig, die benötigten dynamischen Fahrzeugdaten ausfall- und manipulationssicher ermitteln zu können.

Eine Mindestanforderung in Bezug auf die dynamischen Fahrzeugdaten ist dabei die Erkenntnis, ob sich das Fahrzeug bewegt oder ob das Fahrzeug steht. Verfahren und Vorrichtungen zur Ermittlung eines Bewegungszustands eines Fahrzeugs sind aus den EP 1 681 573, EP 0 753 752, EP 1 357 354 und JP 10 078446 bekannt. Die Aufgabe, die der Erfindung zugrunde liegt, ist es, ein Verfahren und eine Vorrichtung zu schaffen, mit dem beziehungsweise der zuverlässig ein Bewegungszustand eines Fahrzeugs ermittelt werden kann.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine korrespondierende Vorrichtung zur Ermittlung eines Bewegungszustands eines Fahrzeugs mit einem Beschleunigungssensor. Abhängig von einem Messsignal des Beschleunigungssensors wird ein Vibrationssignal ermittelt, das repräsentativ ist für Vibrationen des Fahrzeugs. Abhängig von einem Vergleich des Vibrationssignals mit einem vorgegebenen oberen Schwellenwert und mit einem vorgegebenen unteren Schwellenwert wird ermittelt, ob das Fahrzeug steht oder ob das Fahrzeug fährt. Dies ermöglicht eine zuverlässige und kostengünstige Ermittlung des Bewegungszustands des Fahrzeugs abhängig von nur einem Beschleunigungssensor. Der Beschleunigungssensor kann dabei beliebig im Raum ausgerichtet sein. Für die Ermittlung des Bewegungszustands des Fahrzeugs wird die Erkenntnis ausgenutzt, dass Vibrationen auf charakteristische Weise repräsentativ sind dafür, ob das Fahrzeug steht oder fährt. Der Einsatz von zwei vorgegebenen Schwellenwerten ermöglicht beispielsweise die Ausbildung einer Hysterese, was eine verlässlichere Aussage über den jeweiligen Bewegungszustand zur Folge hat. Der vorgegebene obere Schwellenwert und der vorgegebene untere Schwellenwert werden abhängig von mindestens einem GPS-Signal eines GPS-Moduls und/oder einem Geschwindigkeitssignal eines Geschwindigkeitsgebers ermittelt. Dies ermöglicht eine einfache Ermittlung des vorgegebenen oberen Schwellenwerts und des vorgegebenen unteren Schwellenwerts.

In einer vorteilhaften Ausgestaltung wird abhängig von dem Messsignal ein Rohvibrationssignal ermittelt durch einen Abzug eines Gleichanteils des Messsignals von dem Messsignal und abhängig von dem Rohvibrationssignal wird das Vibrationssignal ermittelt. Toleranzen des Beschleunigungssensors sowie der Einfluss der Erdbeschleunigung und anderer statischer Messfehler können auf diese Weise wirkungsvoll korrigiert werden. Ferner können auf diese Weise quasi statische Messeinflüsse, beispielsweise hervorgerufen durch Temperaturschwankungen, wirkungsvoll korrigiert werden.

Gemäß einer weiteren vorteilhaften Ausgestaltung wird abhängig von dem Rohvibrationssignal durch Gleichrichten ein gleichgerichtetes Rohvibrationssignal ermittelt mittels eines Gleichrichters und abhängig von dem gleichgerichteten Rohvibrationssignal wird das Vibrationssignal ermittelt. Dies ermöglicht eine gleichzeitige Auswertung positiver und negativer Beschleunigungsanteile, die charakteristisch sind für die Vibration des Fahrzeugs.

In einer weiteren vorteilhaften Ausgestaltung wird das Vibrationssignal ermittelt abhängig von einer Tiefpassfilterung des gleichgerichteten Rohvibrationssignals. Dies erhöht die Aussagekraft über den jeweiligen Bewegungszustand des Fahrzeugs durch die Annahme, dass ein Zustandswechsel eines Fahrzeugs eher einem niederfrequenten Vorgang folgt und höherfrequente Anteile des gleichgerichteten Rohvibrationssignals deshalb herausgefiltert werden.

In einer weiteren vorteilhaften Ausgestaltung wird abhängig von dem Vibrationssignal bei einem Überschreiten des vorgegebenen oberen Schwellenwerts darauf geschlossen, dass das Fahrzeug fährt und bei einem Unterschreiten des vorgegebenen unteren Schwellenwerts wird darauf geschlossen, dass das Fahrzeug steht. Dies ermöglicht eine zuverlässige Ermittlung des Bewegungszustands des Fahrzeugs. Insbesondere kann wirkungsvoll vermieden werden, dass einem stehenden Fahrzeug ein fahrender Bewegungszustand zugeordnet wird.

In einer weiteren vorteilhaften Ausgestaltung werden der vorgegebene obere Schwellenwert und/oder der vorgegebene untere Schwellenwert ermittelt abhängig von der Verlässlichkeit des GPS-Signals und/oder des Geschwindigkeitssignals. Dies ermöglicht eine zuverlässige Ermittlung des vorgegebenen oberen Schwellenwerts und des vorgegebenen unteren Schwellenwerts. Gemäß einer weiteren vorteilhaften Ausgestaltung wird der Gleichanteil des Messsignals ermittelt mittels der Bildung des arithmetischen Mittels von zumindest einem erfassten Zeitabschnitt des Messsignals. Dies ermöglicht eine kostengünstige Ermittlung des Gleichanteils zum einen dadurch, dass die Bildung des arithmetischen Mittels beispielsweise im Vergleich zu rekursiv arbeitenden statistischen Vorgehensweisen wenig Rechenleistung benötigt. Ein Verzicht auf beispielsweise rekursiv arbeitende Vorgehensweisen hat zum anderen den Vorteil, dass eine Recheneinheit auf diese Weise einfach unterbrochen und in einen Ruhezustand versetzt werden kann. Dies hat einen geringen Energieverbrauch zur Folge.

In einer weiteren vorteilhaften Ausgestaltung wird bei der Tiefpassfilterung zumindest ein PT2-Glied eingesetzt. Dies ermöglicht eine gute Dämpfung hoher Schwingungsanteile mit 40 dB pro Dekade.

Ausführungsbeispiele der Erfindung sind im Folgenden anhand der schematischen Zeichnungen näher erläutert. Es zeigen:
- Figur 1: ein Fahrzeug mit einer Steuervorrichtung, einem Beschleunigungssensor, einem GPS-Modul und einem Geschwindigkeitsgeber,
- Figur 2: die Steuervorrichtung, den Beschleunigungssensor, das GPS-Modul und den Geschwindigkeitsgeber,
- Figur 3: ein Ablaufdiagramm zur Ermittlung eines Bewegungszustands des Fahrzeugs,
- Figuren 4A bis 4H: verschiedene Signalverläufe zur Ermittlung des Bewegungszustands des Fahrzeugs.

Elemente gleicher Konstruktion oder Funktion sind figurenübergreifend mit den gleichen Bezugszeichen gekennzeichnet.

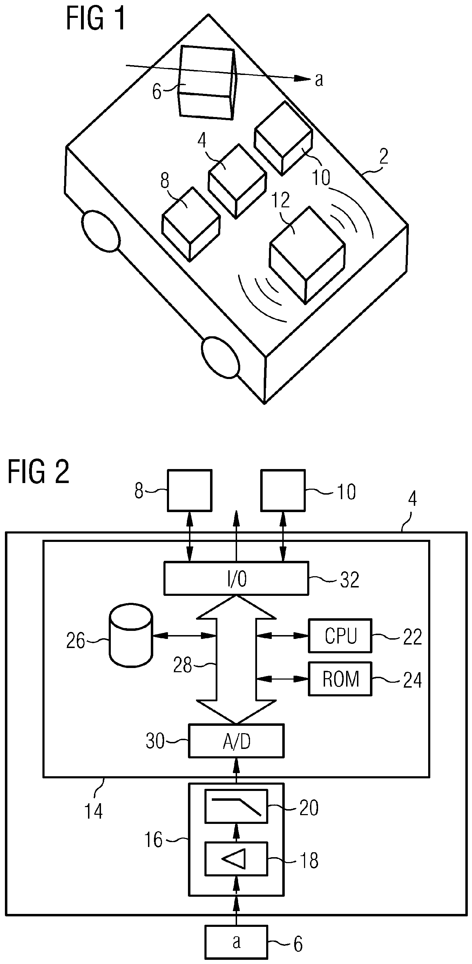

Figur 1 zeigt ein Fahrzeug 2 mit einer Steuervorrichtung 4, die auch als Vorrichtung zur Ermittlung eines Bewegungszustands eines Fahrzeugs bezeichnet werden kann, einem Beschleunigungssensor 6, einem Geschwindigkeitsgeber 8 sowie einem GPS-Modul 10.

Bei dem Fahrzeug 2 kann es sich beispielsweise um ein Kraftfahrzeug handeln. Insbesondere kann es sich bei dem Fahrzeug 2 um eine beliebige Art von Nutzfahrzeug handeln, beispielsweise um einen Omnibus, einen Zementmischer, einen Tiefkühltransporter oder um eine andere dem zuständigen Fachmann bekannte Art von Nutzfahrzeug.

Das Fahrzeug 2 kann eine oder mehrere Geräuschquellen 12 aufweisen, die das Fahrzeug 2 auch bei Fahrzeugstillstand unter Vibrationen versetzen können. Bei der Geräuschquelle 12 handelt es sich beispielsweise um ein Tiefkühlaggregat, eine Vorrichtung zum Mischen von Zement, eine Ladevorrichtung oder eine beliebige andere Art von Vibrationen emittierender Vorrichtung.

Der Beschleunigungssensor 6 ist ausgebildet zum Ermitteln einer axialen Beschleunigung a. Der Beschleunigungssensor 6 kann dabei beliebig im Raum ausgerichtet sein, da das vorgestellte Verfahren nicht auf eine Vorzugsrichtung der ermittelten axialen Beschleunigung a angewiesen ist.

Die Steuervorrichtung 4 ist ausgebildet zur Ermittlung eines Bewegungszustands eines Fahrzeugs 2 abhängig von der mittels des Beschleunigungssensors 6 erfassten axialen Beschleunigung a. Zur Ermittlung des Bewegungszustands des Fahrzeugs 2 werden solche Anteile der axialen Beschleunigung a berücksichtigt, die für Vibrationen des Fahrzeugs 2 repräsentativ sind. Es wird die Erkenntnis genutzt, dass sich die Vibrationen des Fahrzeugs 2 im Stand von den Vibrationen während einer Fahrt unterscheiden. Es ist dabei zu berücksichtigen, dass eine Auswertung der für den Bewegungszustand charakteristischen Vibrationen erschwert werden kann durch eine Überlagerung von Vibrationen, die ihren Ursprung in der Geräuschquelle 12 des Fahrzeugs 2 haben. Die Berücksichtigung der Vibrationen des Fahrzeugs 2 ermöglicht die Ermittlung des Bewegungszustands des Fahrzeugs 2 abhängig nur von dem Beschleunigungssensor 6.

Der Beschleunigungssensor 6, der Geschwindigkeitsgeber 8 sowie das GPS-Modul 10 sind der Steuervorrichtung 4 zugeordnet. Über den Beschleunigungssensor 6 bezieht die Steuervorrichtung 4 ein Signal zum Erfassen der axialen Beschleunigung a. Über das GPS-Modul 10 empfängt die Steuervorrichtung 4 ein GPS-Signal GPS_S. Bei dem GPS-Signal GPS_S handelt es sich beispielsweise um eine Fahrzeuggeschwindigkeit, eine Orientierung des Fahrzeugs 2 und/oder um eine örtliche Lage des Fahrzeugs 2. Der Geschwindigkeitsgeber 8 sendet an die Steuervorrichtung 4 ein Geschwindigkeitssignal G_S. Dabei kann es sich beispielsweise um die Längsgeschwindigkeit des Fahrzeugs 2 handeln. Der Geschwindigkeitsgeber 8 ermittelt das Geschwindigkeitssignal G_S beispielsweise abhängig von Raddrehzahlen des Fahrzeugs 2. Wenn das Geschwindigkeitssignal G_S und/oder das GPS-Signal GPS_S zuverlässig ermittelt werden können, kann der Bewegungszustand des Fahrzeugs 2 einfach und präzise abhängig von dem Geschwindigkeitssignal G_S und/oder dem GPS-Signals GPS_S ermittelt werden. Es wird allerdings davon ausgegangen, dass das Geschwindigkeitssignal G_S und/oder das GPS-Signal GPS_S nicht immer zuverlässig ermittelbar sind.

Für den Fall, dass der Bewegungszustand des Fahrzeugs 2 nicht mittels des Geschwindigkeitssignals G_S und/oder des GPS-Signals GPS-S ermittelbar ist, kann der Bewegungszustand des Fahrzeugs 2 ermittelt werden abhängig von den erfassten Sensordaten des Beschleunigungssensors 6 mittels einer Auswertung durch die Steuervorrichtung 4.

Figur 2 zeigt die Steuervorrichtung 4, den Beschleunigungssensor 6, den Geschwindigkeitsgeber 8 sowie das GPS-Modul 10. Der Beschleunigungssensor 6, der Geschwindigkeitsgeber 8 sowie das GPS-Modul 10 sind der Steuervorrichtung 4 zugeordnet und tauschen mit der Steuervorrichtung 4 Signale aus. Die Steuervorrichtung 4 umfasst eine Recheneinheit 14 sowie ein analoges Modul 16. Das analoge Modul 16 weist einen Verstärker 18 und ein Tiefpassfilter 20 auf. Der Verstärker 18 ist dazu ausgebildet, die axiale Beschleunigung a des Beschleunigungssensors 6 zu erfassen und an das Tiefpassfilter 20 weiterzuleiten.

Die Recheneinheit 14 umfasst einen Prozessor 22, einen Programmspeicher 24 sowie einen Datenspeicher 26. Der Prozessor 22, der Programmspeicher 24 sowie der Datenspeicher 26 sind gekoppelt miteinander über einen Systembus 28.

Die Recheneinheit 14 der Steuervorrichtung 4 ist ausgebildet zur Ausführung eines Programms, das beispielsweise in dem Programmspeicher 24 gespeichert ist. Mittels des Programms kann eine Ermittlung des Bewegungszustands des Fahrzeugs 2 durchgeführt werden. Der Datenspeicher 26 ist ausgebildet zur Speicherung von Daten, beispielsweise von Signalen.

Der Systembus 28 ist gekoppelt mit einem Analog-Digital-Wandler 30. Mittels des Analog-Digital-Wandlers 30 werden die von dem analogen Modul 16 analog aufbereiteten Signale digitalisiert und über den Systembus 28 dem Prozessor 22 sowie dem Datenspeicher 26 für eine weitere Bearbeitung zur Verfügung gestellt. Mit dem Geschwindigkeitsgeber 8 und dem GPS-Modul 10 ist die Steuervorrichtung 4 gekoppelt über eine Schnittstelle 32. Das beispielsweise über die Schnittstelle 32 eingelesene GPS-Signal GPS_S und das Geschwindigkeitssignal G_S kann über dem Systembus 28 an den Prozessor 22 oder den Datenspeicher 26 weitergeleitet werden.

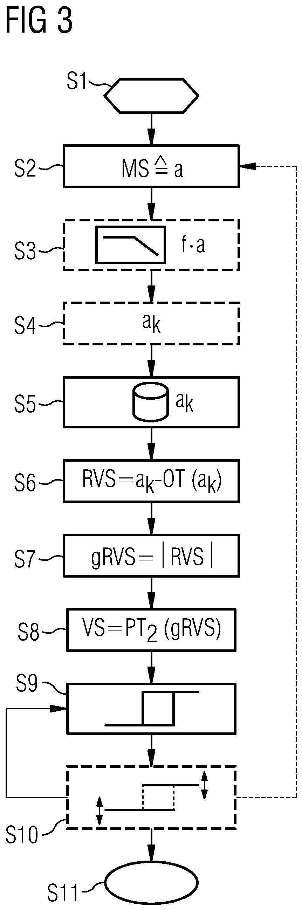

Figur 3 zeigt ein Ablaufdiagramm, wie es beispielsweise von dem in dem Programmspeicher 24 abgespeicherten Programm ausgeführt werden kann.

Das Programm beginnt in einem ersten Programmschritt S1. In einem zweiten Programmschritt S2 wird mittels des Beschleunigungssensors 6 ein Messsignal MS erfasst und von der Steuervorrichtung 4 eingelesen.

Ein dritter Programmschritt S3 ist optional. Das Messsignal MS kann von dem analogen Modul 16 aufbereitet werden. Beispielsweise kann das Messsignal MS mittels des Verstärkers 18 um den Faktor f verstärkt und anschließend mittels des Tiefpassfilters 20 gefiltert werden.

Bevorzugt findet eine anschließende Weiterverarbeitung des Messsignals MS digital statt. In diesem Fall wird das Messsignal MS in einem vierten Programmschritt S4 digitalisiert mittels des Analog-Digital-Wandlers 30. Es ist jedoch beispielsweise auch denkbar, das Verfahren analog durchzuführen. In einem solchen Fall entfällt die Digitalisierung des Messsignals in dem Programmschritt S4.

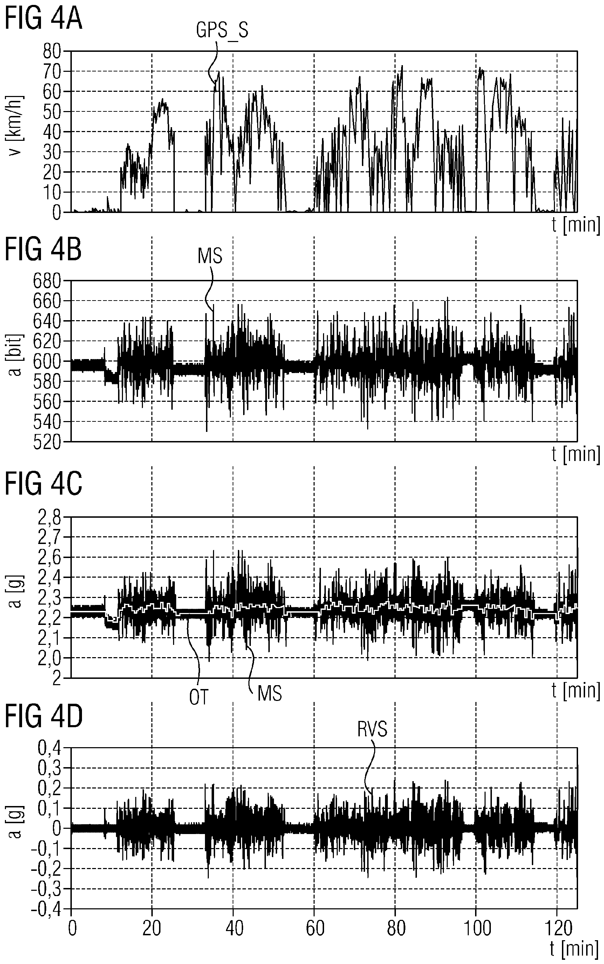

Figur 4B zeigt ein mittels des Beschleunigungssensors 6 erfasstes und mittels der Steuervorrichtung 4 digitalisiertes Messsignal MS über einen Zeitraum von etwa 120 Minuten. Zum Vergleich zeigt Figur 4A die Geschwindigkeit des Fahrzeugs 2 in km/h, wie sie ermittelt wurde beispielsweise abhängig von dem GPS-Signal GPS_S.

In einem fünften Programmschritt S5 wird zumindest ein Zeitabschnitt des Messsignals MS aufgezeichnet. Der Zeitabschnitt des Messsignals MS kann beispielsweise digital gespeichert werden, beispielsweise mittels des Datenspeichers 26.

In einem sechsten Programmschritt S6 wird ein Gleichanteil OT des Messsignals MS zunächst ermittelt und anschließend wird das Messsignal MS um den Gleichanteil OT korrigiert. Bevorzugt wird der Gleichanteil OT des Messsignals MS ermittelt mittels des arithmetischen Mittels des jeweils in dem Programmschritt S5 gespeicherten Zeitabschnitts des Messsignals MS. Figur 4C zeigt das Messsignal MS in Abhängigkeit von einer Erdbeschleunigung g sowie sein Gleichanteil OT über den Zeitraum von etwa 120 Minuten. Durch einen Abzug des Gleichanteils OT von dem Messsignal MS wird ein Rohvibrationssignal RVS gebildet, wie es beispielsweise in Figur 4D in Abhängigkeit von der Erdbeschleunigung g dargestellt ist.

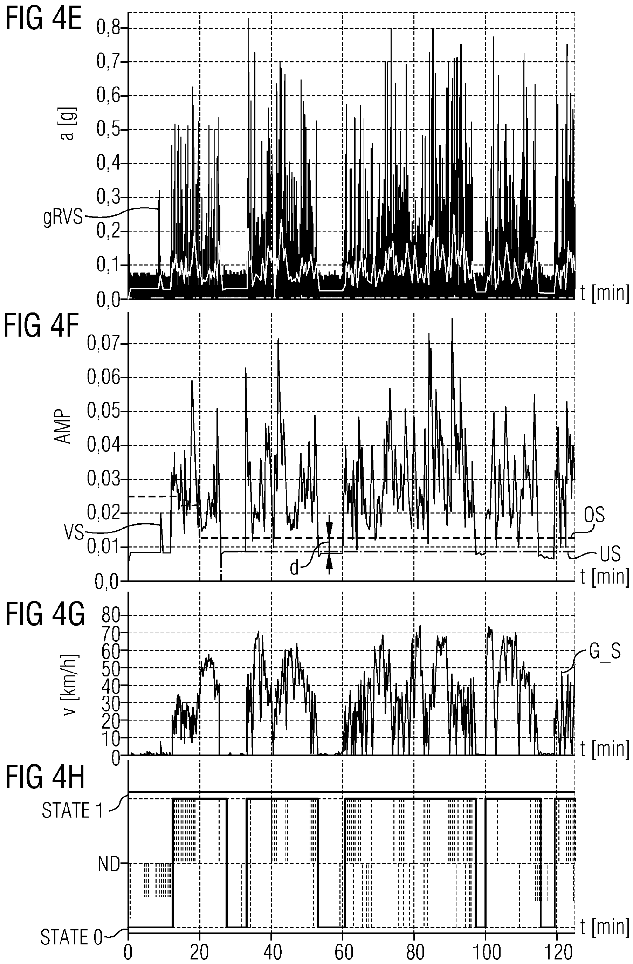

In einem siebten Programmschritt S7 wird ein gleichgerichtetes Rohvibrationssignal gRVS gebildet mittels eines Gleichrichtens des Rohvibrationssignals RVS. Das Gleichrichten des Rohvibrationssignals RVS umfasst beispielsweise eine Betragsbildung des Rohvibrationssignals RVS. Das gleichgerichtete Rohvibrationssignal gRVS ist abgebildet in der Figur 4E in Abhängigkeit von der Erdbeschleunigung g über den Zeitraum von etwa 120 Minuten.

In einem achten Programmschritt S8 wird mittels Tiefpassfilterung des gleichgerichteten Rohvibrationssignals gRVS ein Vibrationssignal VS ermittelt. In einer bevorzugten Ausführungsform umfasst die Tiefpassfilterung des gleichgerichteten Rohvibrationssignals gRVS die Filterung mittels eines PT2-Glieds. Abhängig von der mittels des Beschleunigungssensors 6 erfassten axialen Beschleunigung a erhält man in dem Programmschritt S8 das Vibrationssignal VS, das repräsentativ ist für Vibrationen des Fahrzeugs 2.

In einem neunten Programmschritt S9 wird abhängig von dem Vibrationssignal VS und zumindest einem vorgegebenen Schwellenwert ermittelt, ob das Fahrzeug 2 steht oder ob das Fahrzeug 2 fährt. Bevorzugt erfolgt die Ermittlung des Bewegungszustands des Fahrzeugs 2 abhängig von einem oberen Schwellenwert OS und einem unteren Schwellenwert US. Figur 4F zeigt das Vibrationssignal VS mit einer Amplitude AMP, den oberen Schwellenwert OS und den unteren Schwellenwert US über den Zeitraum von etwa 120 Minuten.

Eine Zuordnung des jeweiligen Bewegungszustands des Fahrzeugs 2 zu einem jeweiligen Zeitpunkt ist dargestellt in Figur 4H. Dem stehenden Fahrzeug 2 wird ein Bewegungszustand STATEO zugeordnet. Dem fahrenden Fahrzeug 2 wird ein Bewegungszustand STATE1 zugeordnet. Für den Fall, dass dem Fahrzeug 2 keiner der beiden Bewegungszustände zugeordnet werden kann, wird dem Fahrzeug ein nichtdefinierter Bewegungszustand ND zugeordnet. Die Figur 4G zeigt zum Vergleich dazu noch einmal die Geschwindigkeit des Fahrzeugs 2 in km/h, diesmal in Abhängigkeit von dem Geschwindigkeitssignal G_S. Bevorzugt wird der obere Schwellenwert OS mit einem Wert initialisiert, der groß ist relativ zu der Amplitude AMP des Vibrationssignals VS und der untere Schwellenwert US wird bevorzugt initialisiert mit einem Wert, der klein ist relativ zu der Amplitude AMP des Vibrationssignals VS. Nach der Ausführung des neunten Programmschritts S9 kann das Programm in einem elften Programmschritt S11 enden.

Bevorzugt wird das mittels der Steuervorrichtung 4 ausgeführte Programm nach dem neunten Programmschritt S9 fortgesetzt in einem zehnten Programmschritt S10. In dem zehnten Programmschritt S10 werden der obere Schwellenwert OS und/oder der untere Schwellenwert US adaptiert.

Eine Adaption des oberen Schwellenwerts OS und/oder des unteren Schwellenwerts US hat den Vorteil, dass eine Änderung des Vibrationssignals VS aufgrund beispielsweise eines veränderten Betriebsmodus des Fahrzeugs 2 berücksichtigt werden kann. Insbesondere bei Nutzfahrzeugen kann sich das Vibrationssignal VS abhängig von einem jeweiligen Einsatz stark verändern. Beispielsweise unterscheidet sich das Vibrationssignal VS eines Kipplasters, der auf einem Baustellengelände fährt, deutlich von dem Vibrationssignal VS des Kipplasters bei zügiger Fahrt auf einer Autobahn.

Die Adaption wird dabei bevorzugt wie folgt vorgenommen: Für den Fall, dass dem Fahrzeug 2 der stehende Bewegungszustand STATEO zugeordnet ist und dass die Amplitude AMP des Vibrationssignals VS größer ist als der untere Schwellenwert US, wird dem unteren Schwellenwert US der Wert der Amplitude AMP des Vibrationssignals VS zugeordnet. Für den Fall, dass dem Fahrzeug 2 der fahrende Bewegungszustand STATE1 zugeordnet ist und dass die Amplitude AMP des Vibrationssignals VS kleiner ist als der obere Schwellenwert OS, wird dem oberen Schwellenwert OS der Wert der Amplitude AMP des Vibrationssignals VS zugeordnet.

Bevorzugt werden sowohl der obere Schwellenwert OS als auch der untere Schwellenwert US nach Ablauf eines vorgegebenen Zeitraums in Richtung ihrer Initialwerte korrigiert. Bei dem vorgegebenen Zeitraum handelt es sich beispielsweise um einige Stunden, ein paar Tage oder ein paar Wochen.

Bevorzugt wird der obere Schwellenwert OS derart vorgegeben, dass dem stehenden Fahrzeug 2 nicht fälschlicherweise der fahrende Bewegungszustand STATE1 zugeordnet wird. Hierfür wird bevorzugt nach jeder Adaption ein Abstand d (Figur 4F) des unteren Schwellenwerts US zu dem oberen Schwellenwert OS ermittelt. Für den Fall, dass der Abstand d kleiner ist als ein Mindestabstand d min, wird der obere Schwellenwert OS derart adaptiert, dass ihm die Summe des unteren Schwellenwerts US und des Mindestabstands d_min zugeordnet wird. Dies kann einen Fehler beim Ermitteln des Bewegungszustands beispielsweise bei starken Vibrationen im stehenden Bewegungszustand STATEO vermeiden.

Bevorzugt wird bei einer Adaption des oberen Schwellenwerts OS und/oder des unteren Schwellenwerts US eine Totzeit berücksichtigt, beispielsweise eine Totzeit von einigen Minuten. Dies stellt sicher, dass das Vibrationssignal VS nach einem Wechsel des Bewegungszustands des Fahrzeugs 2 sicher eingeschwungen ist, bevor die Adaption vorgenommen wird.

Für den Fall eines verlässlichen Empfangs des Geschwindigkeitssignals G_S oder des GPS-Signals GPS_S werden der obere Schwellenwert OS und/oder untere Schwellenwert US bevorzugt in Abhängigkeit von dem Geschwindigkeitssignal G_S und/oder dem GPS-Signal GPS_S adaptiert.

Nach einer Ausführung des zehnten Programmschritt S10 kann das Programm zur erneuten Ermittlung des Bewegungszustands des Fahrzeugs 2 mit dem neunten Programmschritt S9 fortfahren. Es ist jedoch auch möglich, dass das Programm nach Ablauf des zehnten Programmschritt S10 fortfährt mit dem zweiten Programmschritt S2 und mittels des Beschleunigungssensors 6 erneut ein Messsignal MS abhängig von der axialen Beschleunigung a ermittelt. Nach der Ausführung des zehnten Programmschritt S10 kann das Programm in dem elften Programmschritt S11 beendet werden.

Da die von dem Programm ausgeführten Programmschritte S1 bis S11 keine komplizierten Verarbeitungsschritte darstellen, kann die gesamte Steuervorrichtung 4 sehr kostengünstig ausgelegt sein. Dies gilt insbesondere auch im Hinblick auf einen Energieverbrauch der Steuervorrichtung 4. Dies ermöglicht beispielsweise einen autonomen Betrieb der Steuervorrichtung 4 mittels einer eigenen Energiequelle über einen langen Zeitraum.

## Patentansprüche

1. Verfahren zur Ermittlung eines Bewegungszustands eines Fahrzeugs (2) mit einem Beschleunigungssensor (6), bei dem
- abhängig von einem Messsignal (MS) des Beschleunigungssensors (6) ein Vibrationssignal (VS) ermittelt wird, das repräsentativ ist für Vibrationen des Fahrzeugs (2), **dadurch gekennzeichnet, dass**
- bei dem ein vorgegebener oberer Schwellenwert (OS) und ein vorgegebener unterer Schwellenwert (US) ermittelt werden abhängig von mindestens einem GPS-Signal (GPS_S) eines GPS-Moduls (10) und/oder einem Geschwindigkeits-Signal (G_S) eines Geschwindigkeitsgebers (8) und
- bei dem ermittelt wird, ob das Fahrzeug (2) steht oder ob das Fahrzeug (2) fährt, abhängig von einem Vergleich des Vibrationssignals (VS) mit dem vorgegebenen oberen Schwellenwert (OS) und mit dem vorgegebenen unteren Schwellenwert (US).

2. Verfahren nach Anspruch 1, bei dem abhängig von dem Messsignal (MS) ein Roh-Vibrationssignal (RVS) ermittelt wird durch einen Abzug eines Gleichanteils (OT) des Messsignals (MS) von dem Messsignal (MS) und, abhängig von dem Roh-Vibrationssignal (RVS), das Vibrationssignal (VS) ermittelt wird.

3. Verfahren nach Anspruch 2, bei dem, abhängig von dem Roh-Vibrationssignal (RVS), durch Gleichrichten ein gleichgerichtetes Roh-Vibrationssignal (gRVS) ermittelt wird mittels eines Gleichrichters und, abhängig von dem gleichgerichteten Roh-Vibrationssignal (gRVS), das Vibrationssignal (VS) ermittelt wird.

4. Verfahren nach den Ansprüchen 2 und 3, bei dem das Vibrationssignal (VS) ermittelt wird, abhängig von einer Tiefpassfilterung des gleichgerichteten RohVibrationssignals (gRVS).

5. Verfahren nach einem der vorstehenden Ansprüche, bei dem, abhängig von dem Vibrationssignal (VS), bei einem Überschreiten des vorgegebenen oberen Schwellenwerts (OS) darauf geschlossen wird, dass das Fahrzeug (2) fährt und beim Unterschreiten des vorgegebenen unteren Schwellenwerts (US) darauf geschlossen wird, dass das Fahrzeug (2) steht.

6. Verfahren nach einem der vorstehenden Ansprüche, bei dem der vorgegebene obere Schwellenwert (OS) und/oder der vorgegebene untere Schwellenwert (US) ermittelt werden, abhängig von der Verlässlichkeit des GPS-Signals (GPS_S) und/oder des Geschwindigkeits-Signals (G_S).

7. Verfahren nach einem der Ansprüche 2 bis 6 in Verbindung mit Anspruch 2, bei dem der Gleichanteil (OT) des Messsignals (MS) ermittelt wird mittels der Bildung des arithmetischen Mittels von zumindest einem erfassten Zeitabschnitt des Messsignals (MS).

8. Verfahren nach einem der Ansprüche 4 bis 7 in Verbindung mit Anspruch 4, bei dem bei der Tiefpassfilterung zumindest ein PT2-Glied eingesetzt wird.

9. Vorrichtung (2) zur Ermittlung eines Bewegungszustands eines Fahrzeugs (2) mit einem Beschleunigungssensor (6), die dazu ausgebildet ist,
- abhängig von einem Messsignal (MS) des Beschleunigungssensors (6) ein Vibrationssignal (VS) zu ermitteln, das repräsentativ ist für Vibrationen des Fahrzeugs (2),
**dadurch gekennzeichnet, dass** die Vorrichtung dazu ausgebildet ist,
- einen vorgegebenen oberen Schwellenwert (OS) und einen vorgegebenen unteren Schwellenwert (US) zu ermitteln abhängig von mindestens einem GPS-Signal (GPS_S) eines GPS-Moduls (10) und/oder einem Geschwindigkeits-Signal (G_S) eines Geschwindigkeitsgebers (8) und
- zu ermitteln, ob das Fahrzeug (2) steht oder ob das Fahrzeug (2) fährt, abhängig von einem Vergleich des Vibrationssignals (VS) mit dem vorgegebenen oberen Schwellenwert (OS) und mit dem vorgegebenen unteren Schwellenwert (US).

## Claims

1. Method for determining a state of motion of a vehicle (2) with an acceleration sensor (6), in which
- a vibration signal (VS), which is representative of vibrations of the vehicle (2), is determined as a function of a measurement signal (MS) of the acceleration sensor (6), **characterized in that**
- in which a predefined upper threshold value (OS) and a predefined lower threshold value (US) are determined as a function of at least one GPS signal (GPS_S) of a GPS module (10) and/or a speed signal (G_S) of a speed signal generator (8) and
- in which it is determined whether the vehicle (2) is stationary or whether the vehicle (2) is moving, as a function of a comparison of the vibration signal (VS) with the predefined upper threshold value (OS) and with the predefined lower threshold value (US).

2. Method according to Claim 1, in which a raw vibration signal (RVS) is determined as a function of the measurement signal (MS) by subtracting a DC component (OT) of the measurement signal (MS) from the measurement signal (MS) and the vibration signal (VS) is determined, as a function of the raw vibration signal (RVS).

3. Method according to Claim 2, in which a rectified raw vibration signal (gRVS) is determined as a function of the raw vibration signal (RVS) by rectification by means of a rectifier the vibration signal (VS) is determined, as a function of the rectified raw vibration signal (gRVS).

4. Method according to Claims 2 and 3, in which the vibration signal (VS) is determined, as a function of low-pass filtering of the rectified raw vibration signal (gRVS).

5. Method according to one of the preceding claims, in which, as a function of the vibration signal (VS), it is concluded that the vehicle (2) is moving when the predefined upper threshold value (OS) is exceeded, and it is concluded that the vehicle (2) is stationary when the predefined lower threshold value (US) is undershot.

6. Method according to one of the preceding claims, in which the predefined upper threshold value (OS) and/or the predefined lower threshold value (US) are determined, as a function of the reliability of the GPS signal (GPS_S) and/or of the speed signal (G_S).

7. Method according to one of Claims 2 to 6 in conjunction with Claim 2, in which the DC component (OT) of the measurement signal (MS) is determined by forming the arithmetic mean of at least one sensed time period of the measurement signal (MS).

8. Method according to one of Claims 4 to 7 in conjunction with Claim 4, in which at least one PT2 element is used in the low pass filtering.

9. Device (2) for determining a state of motion of a vehicle (2) with an acceleration sensor (6),
which device (2) is designed
- to determine, as a function of a measurement signal (MS) of the acceleration sensor (6), a vibration signal (VS) which is representative of vibrations of the vehicle (2),
**characterized in that** the device is designed
- to determine a predefined upper threshold value (OS) and a predefined lower threshold value (US) as a function of at least one GPS signal (GPS_S) of a GPS module (10) and/or a speed signal (G_S) of a speed signal generator (8) and
- to determine whether the vehicle (2) is stationary or whether the vehicle (2) is moving, as a function of a comparison of the vibration signal (VS) with (OS) and with the predefined lower threshold value (US).

## Revendications

1. Procédé pour déterminer un état de mouvement d'un véhicule (2) muni d'un capteur d'accélération (6), dans lequel
- un signal de vibration (VS) est déterminé en fonction d'un signal de mesure (MS) du capteur d'accélération (6), ledit signal de vibration étant représentatif de vibrations du véhicule (2), **caractérisé en ce que**
- une valeur de seuil supérieure prédéterminée (OS) et une valeur de seuil inférieure prédéterminée (US) sont déterminées en fonction d'au moins un signal GPS (GPS S) d'un module GPS (10) et/ou d'un signal de vitesse (G_S) d'un capteur de vitesse (8), et
- il est déterminé si le véhicule (2) est à l'arrêt ou si le véhicule (2) est en mouvement en fonction d'une comparaison du signal de vibration (VS) à la valeur de seuil supérieure prédéterminée (OS) et à la valeur de seuil inférieure prédéterminée (US).

2. Procédé selon la revendication 1, dans lequel un signal de vibration brut (RVS) est déterminé en fonction du signal de mesure (MS) en soustrayant une partie constante (OT) du signal de mesure (MS) au signal de mesure (MS) et le signal de vibration (VS) est déterminé en fonction du signal de vibration brut (RVS).

3. Procédé selon la revendication 2, dans lequel un signal de vibration brut redressé (gRVS) est déterminé en fonction du signal de vibration brut (RVS) par un redressement effectué au moyen d'un redresseur et le signal de vibration (VS) est déterminé en fonction du signal de vibration brut redressé (gRVS).

4. Procédé selon les revendications 2 et 3, dans lequel le signal de vibration (VS) est déterminé en fonction d'un filtrage passe-bas du signal de vibration brut redressé (gRVS).

5. Procédé selon l'une quelconque des revendications précédentes, dans lequel il est conclu en fonction du signal de vibration (VS) que le véhicule (2) est en mouvement lors d'un dépassement de la valeur de seuil supérieure prédéterminée (OS) et que le véhicule (2) est à l'arrêt lors d'un abaissement en dessous de la valeur de seuil inférieure prédéterminée (US).

6. Procédé selon l'une quelconque des revendications précédentes, dans lequel la valeur de seuil supérieure prédéterminée (OS) et/ou la valeur de seuil inférieure prédéterminée (US) sont déterminées en fonction de la fiabilité du signal GPS (GPS_S) et/ou du signal de vitesse (G_S).

7. Procédé selon l'une quelconque des revendications 2 à 6 en liaison avec la revendication 2, dans lequel la partie constante (OT) du signal de mesure (MS) est déterminée par calcul de la moyenne arithmétique d'au moins une période de temps détectée du signal de mesure (MS).

8. Procédé selon l'une quelconque des revendications 4 à 7 en liaison avec la revendication 4, dans lequel au moins un élément PT2 est utilisé pour le filtrage passe-bas.

9. Dispositif (2) destiné à déterminer un état de mouvement d'un véhicule (2) à l'aide d'un capteur d'accélération (6), qui est conçu pour
- déterminer un signal de vibration (VS) en fonction d'un signal de mesure (MS) du capteur d'accélération (6), lequel signal de vibration est représentatif de vibrations du véhicule (2),
**caractérisé en ce que** le dispositif est conçu pour
- déterminer une valeur de seuil supérieure prédéterminée (OS) et une valeur de seuil inférieure prédéterminée (US) en fonction d'au moins un signal GPS (GPS_S) d'un module GPS (10) et/ou d'un signal de vitesse (G_S) d'un capteur de vitesse (8), et
- pour déterminer si le véhicule (2) est à l'arrêt ou si le véhicule (2) est en mouvement en fonction d'une comparaison du signal de vibration (VS) à la valeur de seuil supérieure prédéterminée (OS) et à la valeur de seuil inférieure prédéterminée (US).
